# EUROPÄISCHE PATENTSCHRIFT

(11) **EP 4 458 539 B1**
(45) Veröffentlichungstag und Bekanntmachung des Hinweises auf die Patenterteilung: **25.03.2026**
(21) Anmeldenummer: 24157277.5
(22) Anmeldetag: 13.02.2024
(51) Int. Cl.: B27N 3/00, B27N 3/02, B27N 7/00, B27N 3/18, C08L 67/04, B27N 1/02, B27N 3/08, B27D 1/00, B27N 9/00

(54) **VERFAHREN ZUR HERSTELLUNG EINES VERBUNDWERKSTOFFS**
METHOD FOR PRODUCING A COMPOSITE MATERIAL
PROCÉDÉ DE FABRICATION D'UN MATÉRIAU COMPOSITE

(30) Priorität: 20.02.2023 AT 501122023
(43) Veröffentlichungstag der Anmeldung: 06.11.2024
(73) Patentinhaber: Scheucher Holzindustrie GmbH, 8092 Mettersdorf (AT)
(72) Erfinder: Bauer, Klaus, 8350 Fehring (AT); Solt-Rindler, Axel, 1180 Wien (AT); Hansmann, Christian, 3465 Königsbrunn am Wagram (AT)
(74) Vertreter: Puchberger & Partner Patentanwälte

(56) Entgegenhaltungen:
- WO-A2-2008/101937
- JP-A- 2008 255 280
- JP-A- 2022 119 673
- US-A1- 2022 243 483

## Beschreibung

Die vorliegende Erfindung betrifft ein Verfahren zur Herstellung eines Verbundwerkstoffs sowie einen Verbundwerkstoff als solchen.

Holzhaltige Verbundwerkstoffe sind im Stand der Technik in unterschiedlichen Ausführungen bekannt und ihr Einsatz findet in verschiedenen Gebieten der Technik statt. Dabei werden meist feinteilige Holzpartikel (Fasern, Späne oder dergleichen) mit einem Bindemittel zu einem festen Verbundwerkstoff verarbeitet.

Ein besonderer Nachteil einer Vielzahl dieser Werkstoffe ist, dass als Bindemittel auf fossilen Rohstoffen basierende Materialien mit einem hohen Wasseranteil von zumindest 30% zum Einsatz kommen. Zwar sind auch Verbundwerkstoffe mit biobasierten Additiven wie beispielsweise Lignin bekannt, jedoch findet auch hier typischerweise eine Verarbeitung im flüssigen Zustand statt, was zum einen die Entfernung des Wassers mit entsprechend hohem Energieeintrag erforderlich macht und zum anderen holzphysikalische Quellungen mit den daraus resultierenden technologischen Nachteilen verursacht, die oftmals durch zusätzliche Prozessschritte wieder ausgeglichen werden müssen. Die Ökobilanz und die Nachhaltigkeit von Werkstoffen auf Holz- bzw. Lignocellulosebasis wird durch den Einsatz von auf fossilen Rohstoffen basierenden Bindemitteln also deutlich verschlechtert.

Plattenwerkstoffe, wie sie beispielsweise für Parkettfußboden-Aufbauten verwendet werden, müssen eine Vielzahl an mechanischen und physikalischen Eigenschaften aufweisen. Als Benchmark für plattenförmige Parkettträger gelten mittels aus fossilen Rohstoffen erzeugte Bindemittel hergestellte hochverdichtete Faserplatten (HDF), welche aufgrund ihrer Eigenschaften auch in den Randbereichen mit filigranen Fräsungen und Klicksystem-Profilen ausgestattet werden können.

Erwähnenswert sind in diesem Zusammenhang auch sogenannte Holz-Kunststoff-Verbunde (Wood-Plastic-Composite, WPC), die jedoch einen hohen Kunststoffgehalt aufweisen, was deren Herstellung kosten- und energieintensiv macht. Typischerweise sind WPC aus biobasierten Kunststoffen nicht erhältlich. WPC weisen auch mit höheren Holzanteilen durch ihre Herstellungstechnologie mittels Extrudern sehr hohe Materialdichten auf und werden daher insbesondere für die gewünschten Einsatzzwecke im Bereich der Parkettwerkstoffe durch diese material- und dichtebedingten Eigenschaften nicht eingesetzt.

Es wäre daher wünschenswert, die oben genannte Nachteile des Standes der Technik zu überwinden und einen Verbundwerkstoff zu schaffen, der ohne Verwendung von auf fossilen Rohstoffen basierenden Materialien und ohne Wasserzugabe mit der daraus zwingend nachfolgenden Trocknung in den Prozessschritten hergestellt werden kann und dennoch eine ausreichende mechanische Stabilität, insbesondere für nachträgliche Bearbeitungsschritte, aufweist und gleichzeitig eine ausgezeichnete Ökobilanz besitzt.

Das Dokument JP2022119673A offenbart die Oberbegriffe der Ansprüche 1 und 11.

Eine Aufgabe der vorliegenden Erfindung kann darin gesehen werden, zumindest eines dieser Ziele zu erreichen. Insbesondere kann eine Aufgabe darin gesehen werden, ein vollständig biobasiertes Verbundmaterial auf Basis von Lignocellulose bereitzustellen, das einen hohen Gehalt an Lignocellulose bzw. Holz aufweist und das unter möglichst wenig Energieeintrag herstellbar ist.

Die Aufgabe wird insbesondere durch ein Verfahren gemäß Anspruch 1 gelöst, bei dem ein lignocellulosehaltiges Grundmaterial mit einem Matrixmaterial vermischt und anschließend verpresst wird. Das Grundmaterial liegt dabei insbesondere als Staub vor, während das Matrixmaterial insbesondere als Pulver vorliegen kann, wobei die durchschnittliche Partikelgröße von Grundmaterial und Matrixmaterial höchstens 500 µm beträgt.

Überraschend wurde im Rahmen der vorliegenden Erfindung herausgefunden, dass eine geringe Partikelgröße von Grundmaterial und Matrixmaterial in Kombination mit einer feinteiligen Vermischung der beiden Komponenten die Herstellung eines plattenförmigen Verbundwerkstoffs ermöglicht, der in seinem Eigenschaftsprofil mit jenem von bekannten Verbundwerkstoffen vergleichbar ist und sich daher in vielen Einsatzgebieten als adäquater Ersatz eignet.

Der Gehalt an lignocellulosischem Grundmaterial beträgt größer gleich 60 Gew.-% an der Gesamtmasse der Mischung und der daraus produzierte Verbundwerkstoff kann Dichten von unter 800kg/m³ aufweisen, wodurch eine Abgrenzung zu Holz-Kunststoff-Verbunden erfolgt, die wie bereits erwähnt, typischerweise einen deutlich höheren Matrixmaterialgehalt aufweisen können, in jedem Fall aber eine höhere Dichte haben. In dem erfindungsgemäßen Verbundwerkstoff liegt der Matrixmaterialgehalt also bei kleiner gleich 40 Gew.-%, er kann jedoch auch kleiner gleich 20 Gew.-% oder kleiner gleich 10 Gew.-% sein.

In dem erfindungsgemäßen Verfahren wird die erhaltene Mischung verpresst und dabei so lange erhitzt, bis die Kerntemperatur des Presslings den Erweichungspunkt des Matrixmaterials erreicht oder überschritten hat. Dabei bezeichnet der Erweichungspunkt insbesondere die Vicat-Erweichungstemperatur bestimmt nach DIN EN ISO 306.

Ohne an diese Theorie gebunden zu sein, gehen die vorliegenden Erfinder davon aus, dass die Erwärmung des Presslings zumindest bis auf den Erweichungspunkt in Kombination mit der Verpressung und der innigen Vermischung der Staub- und Pulverkomponente eine besonders gute Verbindung der beiden Komponenten ermöglicht, um einen formstabilen und mechanisch stark beanspruchbaren Verbundwerkstoff zu bilden.

In bestimmten Ausführungsformen bieten kleinere Partikelgrößen von Grundmaterial und Matrixmaterial bessere Eigenschaften, jedoch kann sich eine zu starke Zerkleinerung wieder negativ auf die Energiebilanz des Verfahrens auswirken, ohne die Eigenschaften des Verbundwerkstoffs wesentlich zu verbessern. Das Matrixmaterial-Pulver kann daher bevorzugt eine durchschnittliche Partikelgröße aufweisen, die unter 100 µm, weiter bevorzugt unter 50 µm oder unter 20 µm liegt.

Die durchschnittliche Partikelgröße bezeichnet in diesem Zusammenhang insbesondere den Medianwert, also das 0,5-Quartil, der Partikelgrößenverteilung.

Als Matrixmaterialien werden Polyhydroxyalkanoate oder Lignin eingesetzt. Von den Polyhydroxyalkanoate ist Polyhydroxybutyrat oder eine Mischung aus Polyhydroxybutyrat und Polyhydroxyvalerat mit höchstens 2 Gew.-% Polyhydroxyvalerat bevorzugt. Als Lignin ist Kraftlignin bevorzugt.

Das Grundmaterial ist bevorzugt Staub aus Nadelholzarten, insbesondere aus Fichtenholz.

Der Mischung aus Grundmaterial und Matrixmaterial muss keine zusätzliche Flüssigkeit, insbesondere Wasser, zugesetzt werden, um einen festen Verbundwerkstoff zu bilden. Um möglichst wenig oder überhaupt keine Energie für die Verdampfung von Flüssigkeit aufwenden zu müssen, ist der Wassergehalt der eingesetzten Ausgangsmaterialien bevorzugt besonders niedrig. So liegt der Wassergehalt des Grundmaterials typischerweise bei weniger als 20 Gew.-% bezogen auf die Gesamtmasse des Grundmaterials, insbesondere bei weniger als 12 Gew.-%. Der Wassergehalt des Matrixmaterials liegt typischerweise bei weniger als 10 Gew.-% bezogen auf die Gesamtmasse des Matrixmaterials. In Hinblick auf den Wassergehalt des Matrixmaterials ist anzumerken, dass dieser vom eingesetzten Matrixmaterial abhängig sein kann, wobei ein Polyhydroxyalkanoat typischerweise einen Wassergehalt von unter 3 Gew.-%, insbesondere von unter 0,4 Gew.-% und Lignin typischerweise einen Wassergehalt von unter 10 Gew.-%, insbesondere von unter 6 Gew.-% aufweisen kann.

Die Mischung aus Grundmaterial und Matrixmaterial kann gegebenenfalls noch ein oder mehrere Additive enthalten, die beispielsweise aus einem oder mehreren der folgenden Stoffklassen ausgewählt sein können: Pigment, Flammschutzmittel, Hydrophobierungsmittel, Odorisierungsmittel. Das Additiv kann der Mischung beim Vermischen von Grundmaterial und Matrixmaterial zugesetzt werden

In speziellen Ausführungsformen kann das Gewichtsverhältnis zwischen Grundmaterial und Additiv und wie folgt eingestellt werden: Grundmaterial zu Pigment 5:1 bis 100:1; Grundmaterial zu Flammschutzmittel 5:1 bis 1000:1; Grundmaterial zu Hydrophobierungsmittel 10:1 bis 1000:1; Grundmaterial zu Odorisierungsmittel 10:1 bis 1000:1.

Das Additiv wird der Mischung gegebenenfalls auch aus Pulver, also insbesondere mit einer durchschnittlichen Partikelgröße von höchstens 100 µm, zugegeben.

Das Grundmaterial kann Holzstaub sein, der direkt von einer Holzverarbeitungsmaschine stammt. Um die gewünschte Partikelgrößenverteilung zu erreichen kann eine Fraktionierungsvorrichtung vorgesehen sein, die in bekannter Weise eine Fraktionierung durchführt. Es kann sich bei der Fraktionierungsvorrichtung und eine Siebvorrichtung oder einen Zyklonabscheider handeln. Die direkte Verwendung von Holzstaub ist vorteilhaft, da keine Energie für die weitere Zerkleinerung des Holzmaterials aufgewendet werden muss.

Das Vermischen von Grundmaterial, Matrixmaterial und dem optionalen Additiv erfolgt gegebenenfalls in einem Hochleistungsmischer, um eine gute Homogenisierung der Komponenten vor dem Verpressen zu ermöglichen. Ein geeigneter Hochleistungsmischer ist beispielsweise ein vertikaler Bandmischer.

Das Verpressen wird insbesondere in einer Warm- oder Heißpresse durchgeführt, die beheizte Pressplatten aufweist. Die im Kern des verpressten Materials zu erreichende Temperatur ist wie bereits erwähnt an den Erweichungspunkt des jeweiligen Matrixmaterials anzupassen, jedoch liegt sie typischerweise über 120°C, insbesondere zwischen 140°C und 200°C. Das Verpressen kann auch mittels Endlospressen erfolgen, wie sie typischerweise bei der Herstellung von anderen Holzwerkstoffplatten eingesetzt werden.

In dem Verfahren können nach dem Verpressen noch weitere Verarbeitungsschritte vorgesehen sein, beispielsweise eine spanende Nachbearbeitung oder ein weiteres Umformen des hergestellten Verbundwerkstoffs.

Es kann auch eine Laminierung oder ein anderweitiges flächiges Verbinden mit einem weiteren Werkstoff erfolgen, sodass ein Schichtwerkstoff gebildet wird. Bei dem weiteren Werkstoff kann es sich beispielsweise um ein Echtholzfurnier handeln, das auf eine Seite des Verbundwerkstoffs aufgebracht wird. So können Plattenbaustoffe gebildet werden, die als Parkettmaterial oder als Möbelbau-Material Anwendung finden.

Durch Anwendung des erfindungsgemäßen Verfahrens kann ein Verbundwerkstoff hergestellt werden, der besondere Eigenschaften aufweist. Daher betrifft die vorliegende Erfindung auch einen Verbundwerkstoff als solchen. Insbesondere ist anzumerken, dass die Verfahrensmerkmale dem Verbundwerkstoff ein besonderes Eigenschaftsprofil verleihen. Die Erfindung betrifft daher auch einen Verbundwerkstoff der über ein erfindungsgemäßes Verfahren erhältlich ist.

Der Verbundwerkstoff kann eine oder mehrere der folgenden Eigenschaften aufweisen: Dichte zwischen 500 und 1.200 kg/m³; Querzugfestigkeit zwischen 0,3 und 2,5 MPa; Dickenquellung 24 h in Wasser zwischen 3% und 30%; erhöhte Resistenz gegen Pilzbefall.

Eine erhöhte Resistenz gegen Pilzbefall kann insbesondere bedeuten, dass nach 4-wöchiger Lagerung bei einer relativen Luftfeuchte von über 90% kein Pilzbefall auftritt. Die Lagerung kann insbesondere in Anlehnung an bzw. gemäß ÖNORM B 6010, Abschnitt 4.22 erfolgen. "Kein Pilzbefall" oder "pilzbefallfrei" kann insbesondere bedeuten, dass durch visuelle Bestimmung in Anlehnung an bzw. gemäß EN ISO 846, Abschnitt 9.1 kein Pilzbefall festgestellt werden kann.

Der Verbundwerkstoff kann mit konventionellen Holzklebstoffen verklebt werden, beispielsweise mit Klebstoffen auf Basis von Polyurethan, Polyvinylacetat, Emulsionspolymer-Isocyanat, duro- oder thermoplastischen Klebesystemen.

Der Verbundwerkstoff kann mit Folien oder flüssigen Systemen beschichtet werden, beispielsweise mit Harzfolien, Lacken, Ölen oder Wachsen.

Die Erfindung betrifft ein Verfahren gemäß Anspruch 1.

Gegebenenfalls ist vorgesehen, dass der Wassergehalt der in Schritt (b) erhaltenen Mischung vor dem Verpressen in Schritt (c) höchstens 20 Gew.-%, insbesondere höchstens 10 Gew.-%, an der Gesamtmasse der Mischung beträgt. Gegebenenfalls ist vorgesehen, dass der Gehalt an Matrixmaterial bezogen auf die Gesamtmasse der Mischung wenigstens 5 Gew.-% beträgt.

Gegebenenfalls ist vorgesehen, dass das Grundmaterial Holzstaub aus Nadelholz, insbesondere aus Fichtenholz, ist.

Erfindungsgemäß ist vorgesehen, dass das Matrixmaterial ein Polyhydroxyalkanoat, Lignin, insbesondere Kraftlignin, oder eine Mischung daraus ist.

Gegebenenfalls ist vorgesehen, dass das Matrixmaterial Polyhydroxybutyrat ist.

Gegebenenfalls ist vorgesehen, dass das Matrixmaterial eine Mischung aus Polyhydroxybutyrat und Polyhydroxyvalerat ist, wobei in der Mischung höchstens 2 Gew.-% Polyhydroxyvalerat enthalten sind.

Gegebenenfalls ist vorgesehen, dass das Verpressen der Mischung durchgeführt wird, bis die Kerntemperatur des Verbundwerkstoffs wenigstens 120°C beträgt, insbesondere bis die Kerntemperatur zwischen 140°C und 200°C beträgt.

Gegebenenfalls ist vorgesehen, dass das Additiv aus einem oder mehreren der folgenden ausgewählt ist: Pigment, Flammschutzmittel, Hydrophobierungsmittel, Odorisierungsmittel.

Gegebenenfalls ist vorgesehen, dass der Verbundwerkstoff nach dem Verpressen einem Bearbeitungsschritt unterzogen wird, beispielsweise Laminieren, Beschichten, Sägen, Schleifen, Fräsen, Bohren.

Gegebenenfalls ist vorgesehen, dass der Verbundwerkstoff nach dem Verpressen zur Bildung eines Parkettmaterials flächig mit einer Holzfurnierschicht verbunden wird.

Die Erfindung betrifft auch einen Verbundwerkstoff, insbesondere hergestellt aus einem erfindungsgemäßen Verfahren, definiert im Anspruch 11.

Gegebenenfalls ist vorgesehen, dass der Verbundwerkstoff eine Dichte zwischen 500 und 1200 kg/m³ aufweist.

Gegebenenfalls ist vorgesehen, dass der Verbundwerkstoff eine Querzugfestigkeit von zwischen 0,3 und 2,5 MPa aufweist.

Gegebenenfalls ist vorgesehen, dass der Verbundwerkstoff eine Dickenquellung in Wasser über 24 Stunden von zwischen 3,0% und 30% aufweist.

Gegebenenfalls ist vorgesehen, dass der Verbundwerkstoff bei 4-wöchiger Lagerung bei über 90% relativer Luftfeuchte pilzbefallfrei ist, wobei die Versuchsdurchführung bei der Lagerung in Anlehnung an ÖNORM B 6010, Abschnitt 4.22 erfolgt, und wobei eine visuelle Bestimmung des Pilzbefalls in Anlehnung an EN ISO 846, Abschnitt 9.1 erfolgt.

Gegebenenfalls ist vorgesehen, dass der Verbundwerkstoff ein Parkettmaterial ist, das eine Holzschicht sowie eine das Grundmaterial und das Matrixmaterial enthaltende Basisschicht umfasst.

Die Figuren zeigen:
Fig. 1 eine schematische Darstellung eines Verbundwerkstoffs gemäß einem Ausführungsbeispiel der vorliegenden Erfindung; und
Fig. 2 eine schematische Darstellung eines Verbundwerkstoffs gemäß einem weiteren Ausführungsbeispiel der vorliegenden Erfindung.

Sofern nicht anders bezeichnet zeigen die Figuren folgende Komponenten: Verbundwerkstoff 1, Einfräsung 2, Fräsprofil 3, Decklamelle 4.

### Ausführungsbeispiel 1:

Holzstaub aus Fichtenholz aus einer industriellen Schleifanlage wurde mittels eines Zyklonabscheiders fraktioniert, um einen Holzstaub mit einer medianen Partikelgröße von etwa 350 µm bereitzustellen. Der Holzstaub wies einen Feuchtegehalt von etwa 9 Gew.-% auf und wurde in weiterer Folge als Grundmaterial in einem erfindungsgemäßen Verfahren eingesetzt.

Polyhydroxybutyrat mit einer medianen Partikelgröße von etwa 7 µm und einem Feuchtegehalt von etwa 0,4% wurde wie vom Hersteller bezogen als Matrixmaterial in einem erfindungsgemäßen Verfahren eingesetzt.

Etwa 80 Gew.-% des Grundmaterials und etwa 20 Gew.-% des Matrixmaterials wurden in einem Hochleistungsmixer mit Doppelflügel bei etwa 30.000 U/min und einer Leistung von etwa 2 PS/I homogenisiert.

Die erhaltene Mischung wurde anschließend in einer Heizpresse zu einem Plattenwerkstoff mit einer Dimension von 250 mm x 1000 mm x 10 mm verpresst. Es wurde so lange gepresst, bis eine Kerntemperatur des Presslings von etwa 180°C erreicht war. Diese Temperatur liegt deutlich über dem Erweichungspunkt des eingesetzten Matrixmaterials.

Nach dem Verpressen wurde ein kompakter Verbundwerkstoff mit den folgenden Eigenschaften erhalten: Dichte etwa 650 kg/m³; Querzugfestigkeit etwa 1 MPa; Dickenquellung etwa 5% über 24 h in Wasser; kein Schimmelbefall bei 10-tägiger Lagerung in 90% relativer Luftfeuchte. Der Verbundwerkstoff weist im Vergleich zu typischen HDF-Materialien ein verbessertes Eigenschaftsprofil auf, insbesondere in Hinblick auf Dickenquellung und Schimmelpilzbefall.

Der Verbundwerkstoff wurde weiters flächig mit einer Schicht aus Echtholz-Decklamellen verklebt und es wurde durch Fräsen an gegenüberliegenden Kanten ein Nut-und-Feder-System gebildet, sodass das derart hergestellte Material als Fußboden-Parkettwerkstoff eingesetzt werden konnte.

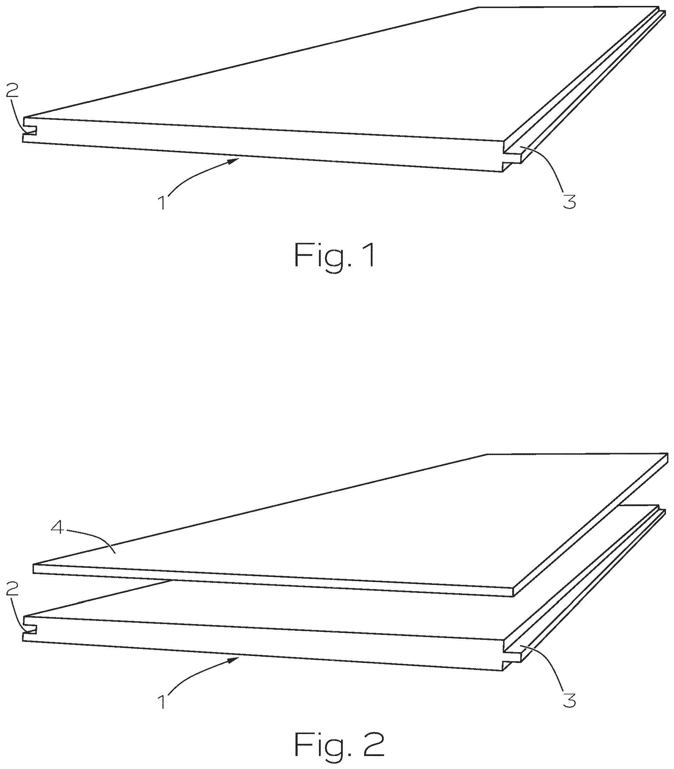

Der erhaltene Verbundwerkstoff 1 mit seiner nutförmigen Einfräsung 2 sowie dem Fräsprofil 3, jedoch ohne Decklamellen ist in der axonometrischen Darstellung von Fig. 1 schematisch gezeigt. Fig. 2 zeigt eine Ansicht mit Decklamelle 4.

### Ausführungsbeispiel 2:

Das zweite Ausführungsbeispiel wurde analog zum ersten Ausführungsbeispiel ausgeführt, mit dem Unterschied, dass als Matrixmaterial ein Kraftlignin-Pulver mit einer medianen Partikelgröße von etwa 25 µm und einem Feuchtegehalt von etwa 6 Gew.-% in einem Gewichtsanteil von etwa 40% eingesetzt wurde. Alle anderen Parameter und Verfahrensschritte waren im Vergleich zum ersten Ausführungsbeispiel ident.

Der erhaltene Verbundwerkstoff hatte ein im Vergleich zum ersten Ausführungsbeispiel nur unwesentlich anderes Eigenschaftsprofil.

## Patentansprüche

1. **Verfahren** zur Herstellung eines insbesondere plattenförmigen Verbundwerkstoffs umfassend die folgenden Schritte:
a. Bereitstellen eines lignocellulosehaltigen, insbesondere als Staub vorliegenden, Grundmaterials mit einer durchschnittlichen Partikelgröße von höchstens 500 µm sowie eines thermoplastischen, insbesondere als Pulver vorliegenden, Matrixmaterials mit einer durchschnittlichen Partikelgröße von höchstens 500 µm, bevorzugt von höchstens 100 µm,
b. Mischen von Grundmaterial, Matrixmaterial und gegebenenfalls zumindest eines weiteren Additivs, wobei der Gehalt an Grundmaterial bezogen auf die Gesamtmasse der Mischung wenigstens 60 Gew.-% beträgt und wobei der Gehalt an Matrixmaterial bezogen auf die Gesamtmasse der Mischung höchstens 40 Gew.-% beträgt,
c. Verpressen der in Schritt (b) erhaltenen Mischung in einer Warmpresse zumindest bis die Kerntemperatur des Verbundwerkstoffs den Erweichungspunkt des Matrixmaterials erreicht hat,
**dadurch gekennzeichnet, dass** das Matrixmaterial ein Polyhydroxyalkanoat, Lignin, oder eine Mischung daraus ist.

2. Verfahren nach Anspruch 1, **dadurch gekennzeichnet, dass** der Wassergehalt der in Schritt (b) erhaltenen Mischung vor dem Verpressen in Schritt (c) höchstens 20 Gew.-%, insbesondere höchstens 10 Gew.-%, an der Gesamtmasse der Mischung beträgt.

3. Verfahren nach Anspruch 1 oder 2, **dadurch gekennzeichnet, dass** der Gehalt an Matrixmaterial bezogen auf die Gesamtmasse der Mischung wenigstens 5 Gew.-% beträgt.

4. Verfahren nach einem der Ansprüche 1 bis 3, **dadurch gekennzeichnet, dass** das Grundmaterial Holzstaub aus Nadelholz, insbesondere aus Fichtenholz, ist.

5. Verfahren nach einem der Ansprüche 1 bis 4, **dadurch gekennzeichnet, dass** das Lignin im Matrixmaterial, sofern vorhanden, Kraftlignin ist.

6. Verfahren nach Anspruch 1, **dadurch gekennzeichnet,**
- **dass** das Matrixmaterial Polyhydroxybutyrat ist,
- oder dass das Matrixmaterial eine Mischung aus Polyhydroxybutyrat und Polyhydroxyvalerat ist, wobei in der Mischung höchstens 2 Gew.-% Polyhydroxyvalerat enthalten sind.

7. Verfahren nach einem der Ansprüche 1 bis 6, **dadurch gekennzeichnet, dass** das Verpressen der Mischung durchgeführt wird, bis die Kerntemperatur des Verbundwerkstoffs wenigstens 120°C beträgt, insbesondere bis die Kerntemperatur zwischen 140°C und 200°C beträgt.

8. Verfahren nach einem der Ansprüche 1 bis 7, **dadurch gekennzeichnet, dass** das Additiv aus einem oder mehreren der folgenden ausgewählt ist: Pigment, Flammschutzmittel, Hydrophobierungsmittel, Odorisierungsmittel.

9. Verfahren nach einem der Ansprüche 1 bis 8, **dadurch gekennzeichnet, dass** der Verbundwerkstoff nach dem Verpressen einem Bearbeitungsschritt unterzogen wird, beispielsweise Laminieren, Beschichten, Sägen, Schleifen, Fräsen, Bohren.

10. Verfahren nach einem der Ansprüche 1 bis 9, **dadurch gekennzeichnet, dass** der Verbundwerkstoff nach dem Verpressen zur Bildung eines Parkettmaterials flächig mit einer Holzfurnierschicht verbunden wird.

11. **Verbundwerkstoff** insbesondere hergestellt aus einem Verfahren nach einem der Ansprüche 1 bis 10, umfassend ein lignocellulosehaltiges Grundmaterial mit einer durchschnittlichen Partikelgröße von höchstens 500 µm, ein thermoplastisches Matrixmaterial sowie gegebenenfalls zumindest ein weiteres Additiv, wobei der Gehalt an Grundmaterial bezogen auf die Gesamtmasse der Mischung wenigstens 60 Gew.-% beträgt, und dass der Gehalt an Matrixmaterial bezogen auf die Gesamtmasse der Mischung höchstens 40 Gew.-% beträgt, **dadurch gekennzeichnet, dass** das Matrixmaterial ein Polyhydroxyalkanoat, Lignin, oder eine Mischung daraus ist.

12. Verbundwerkstoff nach Anspruch 11, **dadurch gekennzeichnet, dass** der Verbundwerkstoff eine Dichte zwischen 500 und 1200 kg/m³ aufweist.

13. Verbundwerkstoff nach Anspruch 11 oder 12, **dadurch gekennzeichnet, dass** der Verbundwerkstoff eine Querzugfestigkeit von zwischen 0,3 und 2,5 MPa aufweist.

14. Verbundwerkstoff nach einem der Ansprüche 11 bis 13, **dadurch gekennzeichnet, dass** der Verbundwerkstoff eine Dickenquellung in Wasser über 24 Stunden von zwischen 3,0% und 30% aufweist.

15. Verbundwerkstoff nach einem der Ansprüche 11 bis 14, **dadurch gekennzeichnet, dass** der Verbundwerkstoff bei 4-wöchiger Lagerung bei über 90% relativer Luftfeuchte pilzbefallfrei ist, wobei die Versuchsdurchführung bei der Lagerung in Anlehnung an ÖNORM B 6010, Abschnitt 4.22 erfolgt, und wobei eine visuelle Bestimmung des Pilzbefalls in Anlehnung an EN ISO 846, Abschnitt 9.1 erfolgt.

16. Verbundwerkstoff nach einem der Ansprüche 11 bis 15, **dadurch gekennzeichnet, dass** der Verbundwerkstoff ein Parkettmaterial ist, das eine Holzschicht sowie eine das Grundmaterial und das Matrixmaterial enthaltende Basisschicht umfasst.

## Claims

1. A **method** for producing a composite, in particular in the form of a panel, comprising the steps of:
a. providing a lignocellulosic base material, in particular present as dust, having an average particle size of at most 500 µm, and a thermoplastic matrix material, in particular present as powder, having an average particle size of at most 500 µm, preferably at most 100 µm,
b. mixing the base material, matrix material and optionally at least one further additive, wherein the base material content relative to the total mass of the mixture is at least 60 wt% and wherein the matrix material content relative to the total mass of the mixture is at most 40 wt%,
c. pressing the mixture obtained in step (b) in a hot press at least until the core temperature of the composite reaches the softening point of the matrix material,
**characterised in that** the matrix material is a polyhydroxyalkanoate, lignin, or a mixture thereof.

2. The method according to claim 1, **characterised in that** the water content of the mixture obtained in step (b) is, prior to pressing, at most 20 wt% weight, in particular at most 10 wt%, based on the total mass of the mixture.

3. The method according to any one of claims 1 or 2, **characterised in that** the matrix material content relative to the total mass of the mixture is at least 5 wt%.

4. The method according to any one of claims 1 to 3, **characterised in that** the base material is wood dust from softwood, in particular from spruce wood.

5. The method according to any one of claims 1 to 4, **characterised in that** the lignin in the matrix material, if present, is kraft lignin.

6. The method according to claim 1, **characterised in that**
- the matrix material is polyhydroxybutyrate,
- or that the matrix material is a mixture of polyhydroxybutyrate and polyhydroxyvalerate, the mixture containing at most 2 wt% polyhydroxyvalerate.

7. The method according to any one of claims 1 to 6, **characterised in that** the mixture is pressed until the core temperature of the composite reaches at least 120°C, in particular until the core temperature is between 140°C and 200°C.

8. The method according to any one of claims 1 to 7, **characterised in that** the additive is selected from one or more of: pigment, flame retardant, hydrophobing agent, odorant.

9. The method according to any one of claims 1 to 8, **characterised in that** after pressing, the composite is subjected to a processing step, for example, laminating, coating, sawing, grinding, milling, drilling.

10. The method according to any one of claims 1 to 9, **characterised in that** after pressing, the composite is joined to a wooden veneer layer in a flush manner for forming a parquet material.

11. A **composite,** in particular produced by a method according to any one of claims 1 to 10, comprising a lignocellulosic base material having an average particle size of at most 500 µm, a thermoplastic matrix material and optionally at least one further additive, wherein the base material content relative to the total mass of the mixture is at least 60 wt%, and wherein the matrix material content relative to the total mass of the mixture is at most 40 wt%, **characterised in that** the matrix material is a polyhydroxyalkanoate, lignin, or a mixture thereof.

12. The composite according to claim 11, **characterised in that** the composite has a density between 500 and 1200 kg/m³.

13. The composite according to any one of claims 11 or 12, **characterised in that** the composite has a transverse tensile strength between 0.3 and 2.5 MPa.

14. The composite according to any one of claims **11** to 13, **characterised in that** the composite has a swelling in thickness between 3.0% and 30% after 24 hours in water.

15. The composite according to any one of claims **11** to 14, **characterised in that** the composite is free of fungal decay after 4 weeks of storage at 90% relative humidity, the test during storage being performed according to ÖNORM B 6010, section 4.22, and the fungal decay being visually determined according to EN ISO 846, section 9.1.

16. The composite according to any one of claims **11** to 15, **characterised in that** the composite is a parquet material, which comprises a wooden layer and a base layer containing the base material and matrix material.

## Revendications

1. **Procédé** de fabrication d'un matériau composite, en particulier en forme de plaque, comprenant les étapes suivantes :
a. fournir un matériau de base contenant de la lignocellulose, en particulier sous forme de poussière, avec une taille moyenne de particules d'au maximum 500 µm, ainsi qu'un matériau matriciel thermoplastique, en particulier sous forme de poudre, avec une taille moyenne de particules d'au maximum 500 µm, de préférence d'au maximum 100 µm,
b. mélanger du matériel de base, du matériel matriciel et, éventuellement, au moins un autre additif, la teneur en matériel de base représentant au moins 60 % en poids par rapport à la masse totale du mélange et la teneur en matériel matriciel représentant au maximum 40 % en poids par rapport à la masse totale du mélange,
c. comprimer le mélange obtenu à l'étape (b) dans une presse à chaud au moins jusqu'à ce que la température à cœur du matériau composite atteigne le point de ramollissement du matériau matriciel,
**caractérisé en ce que** le matériau matriciel est un polyhydroxyalcanoate, de la lignine ou un mélange de ceux-ci.

2. Procédé selon la revendication 1, **caractérisé en ce que** la teneur en eau du mélange obtenu à l'étape (b) avant la compression à l'étape (c) est au maximum de 20 % en poids, en particulier au maximum de 10 % en poids, de la masse totale du mélange.

3. Procédé selon la revendication 1 ou 2, **caractérisé en ce que** la teneur en matériau matriciel représente au moins 5 % en poids par rapport à la masse totale du mélange.

4. Procédé selon l'une des revendications 1 à 3, **caractérisé en ce que** le matériau de base est de la sciure de bois résineux, en particulier d'épicéa.

5. Procédé selon l'une des revendications 1 à 4, **caractérisé en ce que** la lignine dans le matériau matriciel, si présente, est de la lignine Kraft.

6. Procédé selon la revendication 1, **caractérisé**
- **en ce que** le matériau matriciel est du polyhydroxybutyrate,
- ou en ce que le matériau matriciel est un mélange de polyhydroxybutyrate et de polyhydroxyvalérate, le mélange contenant au maximum 2 % en poids de polyhydroxyvalérate.

7. Procédé selon l'une des revendications 1 à 6, **caractérisé en ce que** la compression du mélange est effectuée jusqu'à ce que la température à cœur du matériau composite atteigne au moins 120 °C, en particulier jusqu'à ce que la température à cœur atteigne comprise entre 140 °C et 200 °C.

8. Procédé selon l'une des revendications 1 à 7, **caractérisé en ce que** l'additif est choisi parmi un ou plusieurs des éléments suivants : pigment, agent ignifuge, agent hydrophobe, agent odorisant.

9. Procédé selon l'une des revendications 1 à 8, **caractérisé en ce que** le matériau composite est soumis à une étape d'usinage après la compression, par exemple laminage, revêtement, sciage, meulage, fraisage, perçage.

10. Procédé selon l'une des revendications 1 à 9, **caractérisé en ce que**, après la compression, le matériau composite est relié sur toute sa surface à une couche de placage de bois pour former un matériau de parquet.

11. **Matériau composite,** en particulier fabriqué selon le procédé selon l'une des revendications 1 à 10, comprenant un matériau de base contenant de la lignocellulose avec une taille moyenne de particules d'au maximum 500 µm, un matériau matriciel thermoplastique ainsi que, éventuellement, au moins un autre additif, la teneur en matériau de base représentant au moins 60 % en poids par rapport à la masse totale du mélange et que la teneur en matériau matriciel par rapport à la masse totale du mélange est d'au plus 40 % en poids, **caractérisé en ce que** le matériau matriciel est un polyhydroxyalcanoate, de la lignine ou un mélange de ceux-ci.

12. Matériau composite selon la revendication 11**, caractérisé en ce que** le matériau composite présente une densité comprise entre 500 et 1200 kg/m³.

13. Matériau composite selon la revendication 11 ou 12, **caractérisé en ce que** le matériau composite présente une résistance à la traction transversale comprise entre 0,3 et 2,5 MPa.

14. Matériau composite selon l'une des revendications 11 à 13, **caractérisé en ce que** le matériau composite présente un gonflement en épaisseur dans l'eau sur 24 heures compris entre 3,0 % et 30 %.

15. Matériau composite selon l'une des revendications 11 à 14, **caractérisé en ce que** le matériau composite ne présente aucune infestation fongique après un stockage de 4 semaines à une humidité relative supérieure à 90 %, l'essai étant réalisé conformément à la norme ÖNORM B 6010, section 4.22, et une détermination visuelle de la contamination fongique est effectuée conformément à la norme EN ISO 846, section 9.1.

16. Matériau composite selon l'une des revendications 11 à 15, **caractérisé en ce que** le matériau composite est un matériau de parquet qui comprend une couche de bois ainsi qu'une couche de base contenant le matériau de base et le matériau matriciel.
